(19) Europäisches Patentamt
European Patent Office
Office européen des brevets

(11) **EP 1 330 660 B1**

(12) **FASCICULE DE BREVET EUROPEEN**

(45) Date de publication et mention de la délivrance du brevet:
**02.01.2008 Bulletin 2008/01**

(21) Numéro de dépôt: **01969893.5**

(22) Date de dépôt: **14.09.2001**

(51) Int Cl.:
***G01S 5/14*** (2006.01)

(86) Numéro de dépôt international:
**PCT/FR2001/002863**

(87) Numéro de publication internationale:
**WO 2002/023214 (21.03.2002 Gazette 2002/12)**

(54) **PROCEDE DE CALCUL DE CARACTERISTIQUES INSTANTANEES D'UN SATELLITE EN ORBITE, EQUIPE D'UN RECEPTEUR GNSS.**

VERFAHREN ZUR BERECHNUNG DER MOMENTANEN CHARAKTERISTIKEN EINES MIT EINEM GNSS-EMPFÄNGER AUSGERÜSTETEN SATELLITEN IN EINER BAHN

METHOD FOR CALCULATING INSTANTANEOUS CHARACTERISTICS OF A SATELLITE IN ORBIT, EQUIPPED WITH A GNSS RECEIVER

(84) Etats contractants désignés:
**AT BE CH CY DE DK ES FI FR GB GR IE IT LI LU MC NL PT SE TR**

(30) Priorité: **15.09.2000 FR 0011787**

(43) Date de publication de la demande:
**30.07.2003 Bulletin 2003/31**

(73) Titulaire: **CENTRE NATIONAL D'ETUDES SPATIALES**
**75001 Paris (FR)**

(72) Inventeur: **LAURICHESSE, Denis**
**F-31170 TOURNEFEUILLE (FR)**

(74) Mandataire: **Poulin, Gérard et al**
**Société BREVATOME**
**3, rue du Docteur Lancereaux**
**75008 Paris (FR)**

(56) Documents cités:
**EP-A- 0 961 132** **WO-A-99/50618**

- **MEHLEN C ET AL: "Improving GPS navigation with orbital filter" PROCEEDINGS 4TH ESA INTERNATIONAL CONFERENCE ON SPACECRAFT GUIDANCE, NAVIGATION AND CONTROL SYSTEMS AND TUTORIAL ON MODERN AND ROBUST CONTROL: THEORY, TOOLS AND APPLICATIONS (SP-425), PROCEEDINGS 4TH ESA INTERNATIONAL CONFERENCE ON SPACECRAFT GUIDANC, pages 123-130, XP001009443 2000, Noordwijk, Netherlands, ESA, Netherlands**
- **POTTI J ET AL: "APPLICABILITY OF GPS-BASED ORBIT DETERMINATION SYSTEMS TO A WIDE RANGE OF HEO MISSIONS" INTERNATIONAL TECHNICAL MEETING OF THE SATELLITE DIVISION OF THE INSTITUTE OF NAVIGATION, US,WASHINGTON, DC, no. PART 01 OF 02, 12 septembre 1995 (1995-09-12), pages 589-598, XP000601155**
- **MOREAU M C ET AL: "GPS receiver architecture and expected performance for autonomous navigation in high Earth orbits" NAVIGATION. JOURNAL OF THE INSTITUTE OF NAVIGATION, FALL 2000, INST. NAVIGATION, USA, vol. 47, no. 3, pages 191-204, XP001009440 ISSN: 0028-1522**

EP 1 330 660 B1

**Description**

**DOMAINE TECHNIQUE**

La présente invention concerne un procédé de calcul de caractéristiques (position, vitesse, biais et dérive d'horloge) instantanées d'un satellite en orbite équipé d'un récepteur GNSS, capable de réaliser des mesures de pseudo-distance, lorsque moins de quatre émetteurs sont simultanément en visibilité du satellite récepteur.

**ETAT DE LA TECHNIQUE**

Le procédé de l'invention fait intervenir un récepteur, par exemple de type GNNS, capable de produire des mesures de pseudo-distance et éventuellement de pseudo-vitesse, ainsi qu'un module de calcul de point géométrique instantané.

Si l'on pose :

$\vec{P}_e, \vec{V}_e, \vec{\gamma}_e$ les position, vitesse et accélération d'un satellite émetteur, à la date d'émission du signal,
$\vec{P}, \vec{V}, \vec{\gamma}$ les position, vitesse et accélération du satellite récepteur, à la date de réception du signal,

on a les définitions suivantes :

**Pseudo-distance**

La mesure de pseudo-distance est la distance de propagation géométrique entre un satellite émetteur et le satellite récepteur ajoutée au biais d'horloge du satellite récepteur.

La distance de propagation géométrique entre le satellite émetteur et le satellite récepteur s'écrit :

$$\rho = \|\vec{r}\|, \text{ avec } \vec{r} = \vec{P} - \vec{P}_e$$

La mesure de pseudo-distance instantanée Pd s'écrit directement à partir de la distance de propagation géométrique :

$$Pd = \rho + b = \|\vec{r}\| + b \qquad (1)$$

b étant le biais d'horloge du satellite récepteur.

Cette équation (1) est l'écriture mathématique de la mesure de pseudo-distance réalisée par un récepteur GNSS.

**Pseudo-vitesse instantanée**

La mesure de pseudo-vitesse est la vitesse radiale entre un satellite émetteur et le satellite récepteur ajoutée à la dérive d'horloge du satellite récepteur.

La mesure de pseudo-vitesse instantanée Pv s'écrit en dérivant une fois la distance de propagation géométrique.

On pose $\rho^2 = \vec{r}.\vec{r}$ et donc $\rho\rho' = \vec{r}.\vec{r}'$ avec $\vec{r}' = -\vec{V} - \vec{V}_e$

D' où $\rho' = \vec{u}.\vec{r}'$ avec $\vec{u} = \dfrac{\vec{P} - \vec{P}_e}{\|\vec{P} - \vec{P}_e\|}$

et

$$Pv = \rho' + \frac{\Delta f}{f} \qquad (2)$$

$\dfrac{\Delta f}{f}$ étant le biais de fréquence de l'horloge du satellite récepteur.

La mesure de pseudo-vitesse instantanée peut être directement élaborée à partir de la mesure de phase d'un récepteur GNSS si elle est disponible, ou alors par un calcul de différentiation sur les mesures de pseudo-distances

Ces mesures de pseudo-distance et éventuellement de pseudo-vitesse sont les mesures brutes réalisées par les récepteurs. La définition de ces mesures est donnée dans le document référencé [1] en fin de description .

**Pseudo-accélération instantanée**

La mesure de pseudo-accélération instantanée correspond à l'accélération radiale entre un satellite émetteur et le satellite récepteur corrigée de la dérive d'horloge du satellite récepteur.

La mesure de pseudo-accélération instantanée Pa s'écrit en dérivant deux fois la distance de propagation géométrique.

On a : $\rho\rho'' + \rho'^2 = \vec{r}.\vec{r}'' + \vec{r}'^2$ avec $\vec{r}'' = \vec{\gamma} - \vec{\gamma}_e$ et avec l'hypothèse Képlerienne : $\vec{r}'' = -\mu\left( \dfrac{\vec{P}}{\left\|\vec{P}\right\|^3} - \dfrac{\vec{P}_e}{\left\|\vec{P}_e\right\|^3} \right)$ et

$$Pa = \rho'' = \frac{\vec{r}.\vec{r}'' + \vec{r}'^2 - \rho'^2}{\rho} = \frac{1}{\left\|\vec{r}\right\|}\left[\vec{r}.\vec{r}'' + \vec{r}'^2 - \left(\vec{u}.\vec{r}'\right)^2\right] \quad (3)$$

La mesure de pseudo-accélération instantanée est élaborée par un calcul de différentiation sur les mesures de pseudo-vitesse instantanées.

**TTFF ("time To First Fix")**

La durée TTFF est, pour un récepteur, la durée entre l'initialisation du récepteur et le moment où il est capable de produire un point géométrique. Généralement, cette durée est égale au temps d'acquisition de quatre mesures simultanées provenant de quatre satellites différents comme décrit dans le document référencé [2]. On entend par mesure la mesure radio-électrique proprement dite, mais aussi toutes les données additionnelles permettant de la traiter, comme les positions et vitesses des satellites émetteurs, transmis dans le signal sous forme d'almanachs. Dans le système GPS ("Global Positioning System"), ce temps dépend du temps d'acquisition et de décodage des almanachs (s'ils ne sont pas déjà disponibles), et du temps d'accrochage du signal radio-électrique sur quatre satellites simultanément. L'acquisition et le décodage des almanachs, qui peut se faire sur un seul satellite prend un minimum de 12,5 minutes. Le temps d'accrochage du signal radio-électrique correspond au temps nécessaire aux algorithmes de traitement des signaux du récepteur pour se caler sur la fréquence de l'émetteur et pour être capable d'élaborer des mesures. Ce temps dépend de nombreux facteurs comme la disposition des antennes ou les caractéristiques du récepteur (sensibilité, nombre de canaux). Il peut aller de quelques minutes à quelques heures.

Le calcul classique d'un point GNNS géométrique, qui est constitué de la position et de l'horloge du récepteur, fait intervenir quatre mesures de pseudo-distance simultanées et un calcul généralement basé sur un filtrage de moindres carrés comme décrit dans le document référencé [3]. Lorsque les mesures de pseudo-vitesses sont disponibles (ou calculées à partir des pseudo-distances), il est possible de connaître la vitesse du mobile et la dérive d'horloge. Ce calcul de point instantané est différent d'un filtrage par navigateur orbital, où l'on traite les mesures sur un intervalle de temps plus long.

Dans une application orbitale, c'est-à-dire lorsque le récepteur est embarqué à bord d'un satellite, il réalise la même opération qu'au sol pour calculer sa position : prise en compte de quatre mesures simultanées et calcul d'un point géométrique. La précision de position est aussi bonne que pour un récepteur au sol. Cependant, la durée TTFF de quatre satellites simultanés peut être relativement lente, en raison de la très grande dynamique Doppler de variation du signal d'entrée (par rapport à un récepteur sol). La plage de recherche peut varier de + ou - 40 Khz dans le cas d'un satellite en orbite basse, et le temps de recherche des signaux peut être tellement long que l'on perd le satellite avant de l'avoir accroché. De même, dans certains cas particuliers, on ne peut pas disposer l'antenne de réception sur la bonne face, la loi d'attitude du satellite est peu propice à une bonne réception, ou le récepteur lui-même est peu sensible. On ne peut alors jamais avoir quatre satellites en visibilité simultanée.

L'invention a pour objectif de pallier ces inconvénients en proposant un procédé qui permet, grâce à la connaissance de certains éléments de l'orbite du satellite récepteur, de calculer un point géométrique avec moins de quatre satellites en visibilité. L'objectif visé est le calcul d'un point à partir de deux satellites en visibilité en orbite basse ou en orbite de transfert géostationnaire et d'un satellite en visibilité en orbite géostationnaire.

## EXPOSE DE L'INVENTION

La présente invention propose un procédé de calcul de caractéristiques instantanées d'un satellite en orbite, équipé d'un récepteur GNSS, capable de réaliser des mesures de pseudo-distance lorsque moins de quatre émetteurs sont en visibilité simultanée, caractérisé en ce qu'il comprend les étapes suivantes :

- une première étape de pré-traitement de quantités mesurées par le récepteur, pour délivrer des mesures de pseudo-distance, de pseudo-vitesse et de pseudo-accélération instantanées ;
- une seconde étape de traitement mathématique de ces mesures, enrichies grâce à la connaissance d'informations complémentaires concernant l'orbite du satellite récepteur et le récepteur, délivrant plusieurs solutions,
- une troisième étape de filtrage physique de ces solutions délivrant la position et la vitesse du satellite récepteur ainsi que le biais et la dérive d'horloge du récepteur.

Dans un mode de réalisation au cours de la première étape, la mesure de pseudo-vitesse instantanée est calculée par différentiation de deux mesures de pseudo-distances proches dans le temps : $Pv = \dfrac{Pd2 - Pd1}{\Delta T}$,

$\Delta T$ étant l'écart de temps entre les deux mesures Pd1 et Pd2.

Dans un mode de réalisation au cours de la première étape, la mesure de pseudo-accélération instantanée est calculée par différentiation de deux mesures de pseudo-vitesses instantanées proches dans le temps :

$Pa = \dfrac{Pv2 - Pv1}{\Delta T}$, $\Delta T$ étant l'écart de temps entre les deux mesures Pv1 et Pv2.

Au cours de la seconde étape, les solutions que l'on recherche sont les suivantes :

- position du satellite récepteur P
- vitesse du satellite récepteur V
- biais d'horloge du récepteur b

- dérive de fréquence de l'horloge du récepteur $\dfrac{\Delta f}{f}$.

Au cours de la troisième étape, pour un satellite récepteur en orbite basse, on considère le demi-grand axe a de la solution recherchée comme borné : 6400 Km < a < 8400 Km, la valeur absolue de la dérive de fréquence de l'horloge du récepteur comme bornée :

- en orbite basse avec un oscillateur de faible qualité, on a :

$$\left|\frac{\Delta f}{f}\right| < 300 \ m/s$$

- et en orbite géostationnaire, avec un oscillateur de bonne qualité, on a :

$$\left|\frac{\Delta f}{f}\right| < 10 \ m/s.$$

Au cours de la troisième étape, on peut considérer une inclinaison de référence du satellite récepteur. On choisit alors l'inclinaison du satellite qui est la plus proche de cette inclinaison de référence.

Au cours de cette étape, le satellite doit être en visibilité de chaque émetteur.

Le procédé de l'invention permet d'obtenir les caractéristiques instantanées du satellite récepteur plus rapidement qu'avec les techniques classiques, et ainsi d'améliorer la durée "time to first fix". Ce point géométrique obtenu avec moins de quatre satellites en visibilité simultanée peut être utilisé pour restreindre la plage Doppler de recherche et donc permettre d'acquérir les différents satellites simultanés, pour ensuite pouvoir réaliser un point classique par exemple. Lorsque quatre satellites émetteurs au moins sont en visibilité du satellite récepteur, le procédé de l'invention est compatible avec un calcul de point classique (précision identique).

## BREVE DESCRIPTION DES DESSINS

La figure 1 illustre un système de réception GNSS.
La figure 2 illustre les différentes étapes du procédé de l'invention.
La figure 3 illustre un dispositif permettant de mettre en oeuvre le procédé de l'invention.

## EXPOSE DETAILLE DE MODES DE REALISATION

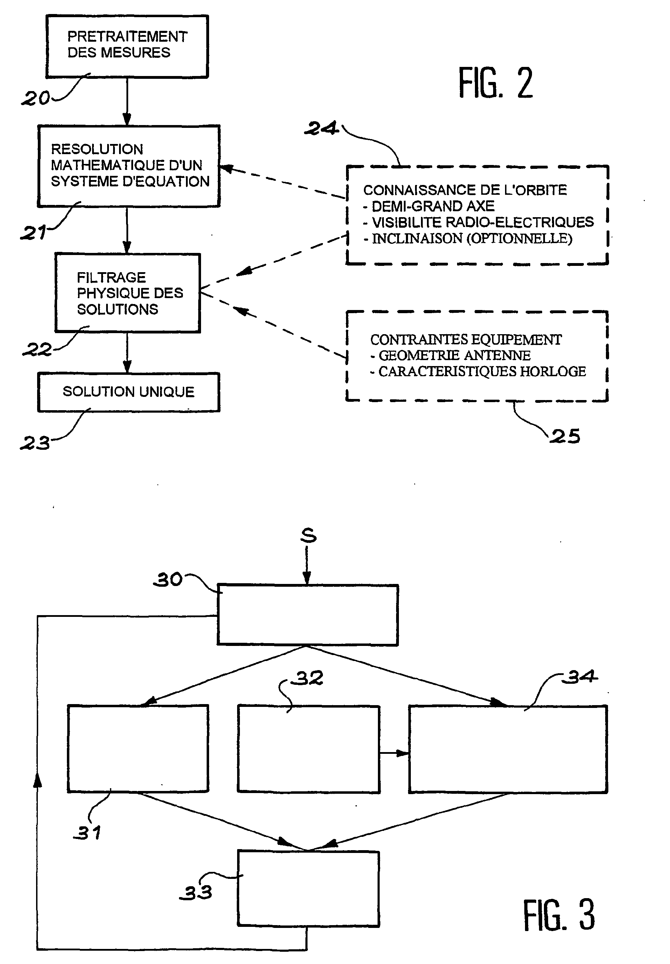

L'invention concerne un procédé de calcul du point géométrique instantané d'un satellite récepteur avec moins de quatre satellites émetteurs en visibilité. Ce procédé permet en outre de connaître les vitesse et dérivé d'horloge du récepteur.
Le procédé de l'invention permet, en effet, d'utiliser des informations complémentaires sur l'orbite du satellite pour compenser le manque de mesures lorsque moins de quatre satellites émetteurs sont présents simultanément.
En orbite, on dispose en effet d'informations complémentaires à exploiter, comme le mouvement de l'orbite du satellite récepteur, l'inclinaison de l'orbite dans le cas d'un satellite en orbite basse, ou l'altitude dans le cas d'un satellite géostationnaire, ainsi que des informations propres au récepteur, comme la géométrie de l'antenne, les sensibilités de réception (bilans de liaison) et les caractéristiques de l'horloge. Ces informations peuvent être utilisées pour calculer un point géométrique avec moins de quatre satellites émetteurs en visibilité simultanée. Ce point, même peu précis, peut être utilisé pour restreindre la plage Doppler de recherche et donc permettre d'acquérir les satellites émetteurs simultanément pour ensuite pouvoir réaliser un point classique par exemple.

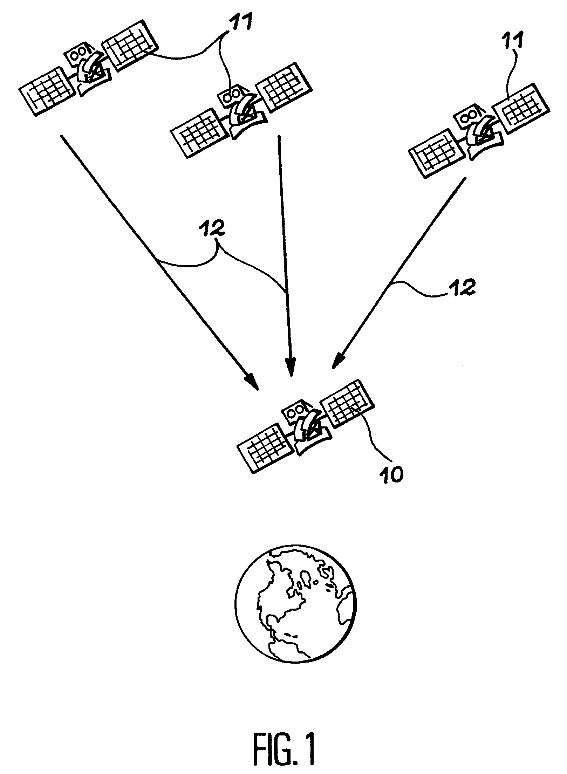

La figure 1 illustre ainsi la mise en oeuvre du procédé de l'invention dans le cas d'un récepteur de type GNSS embarqué sur le satellite, avec un satellite récepteur 10, et trois satellites émetteurs 11 en visibilité de celui-ci, et les signaux radio-électriques transmis 12. Le récepteur doit être de type GNSS, être embarqué sur un satellite en orbite et doit être capable de recevoir des signaux de manière à réaliser au moins des mesures de pseudo-distance. De tels signaux peuvent être transmis par d'autres satellites en orbite ou à partir d'émetteurs terrestres. Les récepteurs peuvent, par exemple, être des types suivants : GPS, GLONASS, GNSS1, GNSS2, GALILEO, transpondeur spectre étalé ou bande étroite, DORIS spectre étalé. Les constellations GPS et GLONAS1 sont respectivement décrites dans les documents référencés [4] et [5]. GNNS1 désigne l'équipement géostationnaire en complément de GPS et GLONASS utilisant les paquetages de navigation des satellites INMARSAT 3. GNNS2 désigne le futur système civil de navigation par satellites. GALILEO désigne le futur système européen de navigation par satellites. DORIS spectre étalé désigne un futur système de radionavigation utilisant des signaux émis par des balises terrestres et reçus par des satellites.
Comme illustré sur la figure 2, le procédé de l'invention comprend les étapes suivantes :

- une étape 20 de pré-traitement des mesures disponibles sur le satellite récepteur 10. Les données en entrée sont les mesures de pseudo-distance brute et éventuellement de pseudo-vitesse brute instantanée. Les données en sortie sont les mesures de pseudo-distance Pd, de pseudo-vitesse instantanée Pv, et de pseudo-accélération instantanée Pa,
- une étape 21 de résolution mathématique d'un système d'équations délivrant N solutions mathématiques. Les données en entrée sont les mesures de pseudo-distance, de pseudo-vitesse et de pseudo-accélération instantanées, ainsi que la connaissance de l'orbite du récepteur. Les données en sortie correspondent à un ensemble fini de solutions dudit système d'équations.
- une étape 22 de filtrage physique de ces solutions. Les données en entrée sont les solutions du système mathématique, la connaissance de l'orbite du récepteur ainsi que des informations sur l'équipement de réception. La donnée en sortie correspond à une solution physique à un problème unique 23 (position, temps, vitesse, dérive d'horloge).

Les blocs 24 et 25, illustrés sur la figure 2, représentent les données utilisées au cours des étapes 21 et 22 de résolution mathématique d'un système d'équations et de filtrage physique des solutions du procédé de l'invention.
Le bloc 24 concerne la connaissance de l'orbite du satellite récepteur 10, grâce à :

- son demi-grand axe,
- ses visibilités radio-électriques,

- son inclinaison (optionnelle).

Le bloc 25 concerne les contraintes équipement réception de ce satellite 10, à savoir :

- la géométrie antenne,
- les caractéristiques horloge.

Chacune de ces étapes 20, 21 et 22 va être analysée ci-dessous.

**• Etape de pré-traitements (20)**

Les pré-traitements consistent, à partir des quantités mesurées par le récepteur GNSS embarqué sur le satellite 10, à calculer les quantités suivantes :

- pseudo-distance Pd,
- pseudo-accélération instantanée Pv,
- pseudo-accélération instantanée Pa.

La mesure de pseudo-distance est toujours mesurée par le récepteur.

La mesure de pseudo-vitesse instantanée est soit disponible dans le récepteur (calculée par exemple à partir des mesures de phase), soit, elle n'est pas disponible et on la calcule alors par différentiation de deux mesures de pseudo-distances proches dans le temps : $Pv = \dfrac{Pd2 - Pd1}{\Delta T}$ , $\Delta T$ étant l'écart de temps entre les deux mesures Pd1 et Pd2.

La mesure de pseudo-accélération instantanée est calculée par différentiation de deux mesures de pseudo-vitesses instantanées proches dans le temps : $Pa = \dfrac{Pv2 - Pv1}{\Delta T}$ , $\Delta T$ étant l'écart de temps entre les deux mesures Pv1 et Pv2.

**• Etape de résolution du problème mathématique (21)**

Les inconnues du problème, c'est-à-dire les valeurs que l'on cherche à résoudre, sont au nombre de huit. Il s'agit :

- de la position du satellite récepteur P
- de la vitesse du satellite récepteur V
- du biais d'horloge du récepteur b

- de la dérive de fréquence de l'horloge du récepteur $\dfrac{\Delta f}{f}$

La résolution du problème mathématique fait intervenir un ensemble de huit équations. Cet ensemble est constitué des mesures disponibles et de la connaissance supplémentaire de l'orbite.

**1) Equations dans le cas d'un satellite récepteur en orbite circulaire basse avec deux satellites émetteurs en visibilité**

Dans cette hypothèse, les équations de circularité suivantes sont vérifiées :

$$\vec{P}.\vec{V} = 0 \qquad\qquad (4)$$

et

$$\left\|\vec{v}\right\|^2 - \frac{\mu}{\left\|\vec{P}\right\|} = 0 \qquad (5)$$

En présence de deux satellites émetteurs en visibilité, on dispose de plus des quantités suivantes : Pd1, Pd2, Pv1, Pv2, Pa1, Pa2 et donc des équations de mesures (1), (2) et (3) correspondantes.

On dispose donc en tout de huit équations pour huit inconnues. Le système possède donc un nombre de solutions fini, que l'on résout par une méthode de moindres carrés.

**2) Equations dans le cas d'un satellite récepteur en orbite basse avec trois satellites émetteurs en visibilité**

En présence de trois satellites émetteurs en visibilité, on dispose des quantités suivantes : Pd1, Pd2, Pd3, Pv1, Pv2, Pv3, Pa1, Pa2, Pa3 et donc des équations de mesures (1), (2) et (3) correspondantes.

On dispose donc en tout de neuf équations pour huit inconnues. Le système possède donc un nombre de solutions fini, que l'on résout par une méthode de moindres carrés.

Dans ce cas, l'orbite n'a pas besoin d'être circulaire.

**3) Equations dans le cas d'un satellite récepteur en orbite géostationnaire avec un satellite émetteur en visibilité**

Dans cette hypothèse, les équations de circularité suivantes sont vérifiées :

$$\vec{P}.\vec{V} = 0 \qquad\qquad (4)$$

et

$$\left\|\vec{v}\right\|^2 - \frac{\mu.}{\left\|\vec{P}\right\|} = 0 \qquad\qquad (5)$$

Une contrainte supplémentaire existe sur le demi grand axe :

$$\left\|\vec{P}\right\| = 42164\ Km, \qquad (6)$$

puis deux contraintes pour l'orbite équatoriale :

$$\vec{P}_z = 0 \qquad\qquad\qquad (7)$$

et

$$\vec{V}_z = 0, \qquad\qquad\qquad (8)$$

En présence d'un satellite émetteur en visibilité, on dispose des quantités suivantes : Pd1, Pv1, Pa1 et donc des équations de mesures (1), (2) et (3) correspondantes.

On dispose donc en tout de huit équations pour huit inconnues. Le système possède donc un nombre de solutions fini, que l'on résout par une méthode de moindres carrés.

**• Etape de filtrage physique des solutions (22)**

Le filtrage physique des solutions obtenues à l'étape précédente est réalisé grâce à des considérations supplémentaires sur la physique du problème. Ces considérations sont les suivantes :

1. Pour les orbites basses, le demi-grand axe de la solution recherchée est borné typiquement 6400 Km < a < 8400 Km.
2. Le satellite doit être en visibilité radio-électrique de chaque émetteur (c'est-à-dire que pour chaque satellite émetteur la droite émetteur-récepteur ne doit pas traverser la terre, et que cette droite de propagation du signal doit être compatible avec les diagrammes d'antenne d'émission et de réception).
3. La valeur absolue de la dérive de fréquence de l'horloge du récepteur doit être bornée en fonction du type d'oscillateur utilisé.

- Typiquement en orbite basse (utilisation d'un oscillateur basse qualité dans le récepteur) :

$$\left|\frac{\Delta f}{f}\right| < 300 \ m/s \ .$$

- et en orbite géostationnaire (utilisation d'un oscillateur haute qualité dans le récepteur) :

$$\left|\frac{\Delta f}{f}\right| < 10 \ m/s .$$

4. Il est possible d'utiliser un critère supplémentaire optionnel, de manière à pouvoir discriminer d'éventuelles solutions multiples dans le cas d'un satellite récepteur en orbite basse, qui est l'inclinaison de référence du satellite. En effet, cette inclinaison de référence est un paramètre quasi-constant dans la vie du satellite. On choisit alors l'inclinaison qui est la plus proche de cette inclinaison de référence.

Le procédé de l'invention permet de calculer un point géométrique instantané d'un satellite récepteur à partir de signaux reçus en orbite, lorsque moins de quatre émetteurs sont présents simultanément. Les caractéristiques principales de l'orbite du récepteur pour lesquelles le procédé fonctionne sont les suivantes :

- orbite basse (6400 Km < a < 8400 Km) et peu excentrique (e < 0,01), avec deux satellites en visibilité,
- orbite basse (6400 Km < a < 8400 Km), avec trois satellites en visibilité,
- orbite géostationnaire avec un satellite en visibilité.

Le procédé de l'invention vient en complément du calcul de point classique lorsque quatre satellites ou plus sont en visibilité.
Dans un exemple d'utilisation, un dispositif de calcul de caractéristiques instantanées d'un satellite récepteur en orbite permettant de mettre en oeuvre ce procédé comprend :

- un circuit 30 de traitement du signal radio-électrique S, de conception proche du matériel, qui se charge d'élaborer les mesures,
- un circuit 31 de calcul des caractéristiques du satellite (point géométrique) à partir de plusieurs mesures,
- un circuit 34 (optionnel) permettant de calculer les caractéristiques du satellite à partir d'un navigateur orbital 32,
- un circuit 33 de calcul de l'aide externe apportée au traitement du signal. Cette aide permet d'accélérer la vitesse d'accrochage d'autres satellites. Cette aide peut provenir du calcul du point géométrique à partir des différentes mesures, ou du navigateur orbital 32.

Ce dispositif peut être réalisé sous la forme d'un composant additionnel au récepteur orbital, par exemple de type GNSS. Ce composant additionnel permet alors un calcul du point GNSS à partir de deux mesures au moins. L'aide pour le traitement du signal est alors disponible dès que deux mesures sont présentes.

**Exemples d'application**

Le procédé de l'invention est applicable à tous les récepteurs GNSS en orbite, à partir du moment où l'on possède une connaissance, même grossière, de cette orbite (le fait de savoir si on est en orbite basse quasi-circulaire ou géostationnaire suffit), ce qui couvre une large gamme de satellites et d'orbites.

Différentes applications du procédé de l'invention sont possibles, par exemple à :

- un récepteur de faible sensibilité. Dans ce cas, il est difficile d'accrocher quatre satellites simultanément,
- des orbites particulières, comme l'orbite de transfert géostationnaire ou l'orbite géostationnaire, lorsque le lien de transmission radioélectrique est faible
- un satellite possédant une loi d'attitude ou une disposition des antennes non optimale pour la bonne réception des signaux GNSS,
- l'amélioration du délai TTFF des récepteurs, par fourniture d'un point avec moins de quatre satellites en visibilité,
- l'initialisation autonome des navigateurs orbitaux (sans aide au sol),
- la fourniture plus rapide d'une aide à l'acquisition des signaux (réduction des seuils) pour le récepteur.

**REFERENCES**

[1] "Techniques et technologies des véhicules spatiaux. Localisation spatiale" de Michel Grondin, Jean-Luc Issler et Laurent Lestarguit (Editions Cépaduès, module VI, pages 191 à 264).

[2] "Orbital Navigation with a GPS Receiver on the HETE Spacecraft", de J.L. Issler, M. Tello (ION GPS, janvier 1994).

[3] Linear algebra, Geodesy and GPS" de G. Strang, K. Borre (Wellesley Cambridge, chapitre 14, Global positioning system", page 447 à 513).

[4] "Accord de standardisation ; caractéristiques du système mondial de détermination de la position NAVSTAR (GPS) " (Standardization Agreement : Characteristics of the NAVSTAR Global Positioning System (GPS)), (NATO, STANAG 429, 6 novembre 1991).

[5] "GLONASS Approaches Full Operational Capability (FOC)" de Peter Daly (ION GPS, pages 1021 à 1025, septembre 1995) .

**Revendications**

1. Procédé de calcul de caractéristiques instantanées d'un satellite en orbite, équipé d'un récepteur GNSS, capable de réaliser des mesures de pseudo-distance, lorsque moins de quatre émetteurs sont en visibilité simultanée, **caractérisé en ce qu'**il comprend les étapes suivantes :

   - une première étape (20) de pré-traitement de quantités mesurées par le récepteur pour délivrer des mesures de pseudo-distance, de pseudo-vitesse et de pseudo-accélération instantanées ;
   - une seconde étape (21) de traitement mathématique de ces mesures, enrichies grâce à la connaissance d'informations complémentaires concernant l'orbite du satellite récepteur et le récepteur, délivrant plusieurs solutions,
   - une troisième étape (22) de filtrage physique de ces solutions délivrant la position et la vitesse du satellite récepteur ainsi que le biais et la dérive d'horloge du récepteur.

2. Procédé selon la revendication 1, dans lequel, au cours de la première étape (20), la mesure de pseudo-vitesse instantanée est calculée soit par différentiation de deux mesures de pseudo-distances proches dans le temps :

$$Pv = \frac{Pd2 - Pd1}{\Delta T}\, , \; \Delta T$$ étant l'écart de temps entre les deux mesures Pd1 et Pd2, soit par l'utilisation de mesures de phases, si elles sont disponibles

3. Procédé selon la revendication 1, dans lequel, au cours de la première étape (20), la mesure de pseudo-accélération instantanée est calculée soit par différentiation de deux mesures de pseudo-vitesses instantanées proches dans le temps : $Pa = \dfrac{Pv2 - Pv1}{\Delta T}$ , $\Delta T$ étant l'écart de temps entre les deux mesures $Pv1$ et $Pv2$.

**4.** Procédé selon la revendication 1, dans lequel, au cours de la seconde étape (21), les solutions que l'on recherche sont les suivantes :

- position du satellite récepteur $\vec{P}$
- vitesse du satellite récepteur $\vec{V}$
- biais d'horloge du récepteur b

- dérive de fréquence de l'horloge du récepteur $\dfrac{\Delta f}{f}$ .

**5.** Procédé selon la revendication 1, dans lequel, au cours de la troisième étape (22), pour un satellite récepteur en orbite basse on considère le demi-grand axe a de la solution recherchée comme borné : 6400 Km < a < 8400 Km.

**6.** Procédé selon la revendication 1, dans lequel, au cours de la troisième étape (22), on considère la valeur absolue de la dérive de fréquence de l'horloge du récepteur comme bornée :

- pour un oscillateur basse qualité (orbite basse) :

$$\left| \frac{\Delta f}{f} \right| < 300 \ m \ / \ s$$

- pour un oscillateur haute qualité (orbite géostationnaire) :

$$\left| \frac{\Delta f}{f} \right| < 10 \ m \ / \ s.$$

**7.** Procédé selon la revendication 1, dans lequel, au cours de la troisième étape (22), on considère une inclinaison de référence du satellite récepteur (10).

**8.** Procédé selon la revendication 7, dans lequel on choisit l'inclinaison du satellite qui est la plus proche de cette inclinaison de référence.

**9.** Procédé selon la revendication 1, dans lequel, au cours de la troisième étape, le satellite est en visibilité radioélectrique de chaque émetteur.

**10.** Procédé selon la revendication 1, dans lequel au moins un émetteur est un satellite.

**11.** Procédé selon la revendication 1, dans lequel au moins un émetteur est une station terrestre.


**Claims**

**1.** A method for calculating instantaneous characteristics of a satellite in orbit, equipped with a GNSS receiver, capable of performing measurements of pseudo-distance, when fewer than four transmitters are in simultaneous visibility, **characterised in that** it comprises the following stages :

- a first stage (20) of pre-processing of quantities measured by the receiver to deliver measurements of pseudo-distance, pseudo-speed and instantaneous pseudo-accelerations ;
- a second stage (21) of mathematically processing these measurements, enhanced by the knowledge of complementary data concerning the orbit of the receiver satellite and the receiver, delivering several solutions,
- a third stage (22) of physically filtering these solutions delivering the position and the speed of the receiver satellite as well as the clock bias and drift of the receiver.

2. The method as claimed in Claim 1, wherein, during the first stage (20), measurement of instantaneous pseudo-speed is calculated either by differentiation of two measurements of pseudo-distances close in time :

$$Pv = \frac{Pd2 - Pd1}{\Delta T}$$ , $\Delta T$ being the time spread between the two measurements Pd1 and Pd2, or by utilisation of phase measurements, if available.

3. The method as claimed in Claim 1, wherein, during the first stage (20), measurement of instantaneous pseudo-acceleration is calculated either by differentiation of two instantaneous measurements of pseudo-speeds close in

time : $$Pa = \frac{Pv2 - Pv1}{\Delta T}$$ , $\Delta T$ being the time spread between the two measurements Pv1 and Pv2.

4. The method as claimed in Claim 1, wherein, during the second stage (21), the desired solutions are the following :

- position of the receiver satellite $\vec{P}$
- speed of the receiver satellite $\vec{V}$
- clock bias of the receiver b

- clock frequency shift of the receiver $\dfrac{\Delta f}{f}$ .

5. The method as claimed in Claim 1, wherein, during the third stage (22), for a receiver satellite in low orbit the meniscal axis a of the desired solution is considered limited : 6400 Km < a < 8400 Km.

6. The method as claimed in Claim 1, wherein, during the third stage (22), the absolute value of the clock frequency shift of the receiver is considered limited :

- for a low-quality oscillator (low orbit) :

$$\left| \frac{\Delta f}{f} \right| < 300 \, m/s$$

- for a good-quality oscillator, (geostationary orbit) :

$$\left| \frac{\Delta f}{f} \right| < 10 \, m/s \ .$$

7. The method as claimed in Claim 1, wherein, during the third stage (22), a reference inclination of the receiver satellite (10) is considered.

8. The method as claimed in Claim 7, wherein the inclination of the satellite is the nearest to this reference inclination.

9. The method as claimed in Claim 1, wherein, during the third stage, the satellite is in radio-electric visibility of each transmitter.

10. The method as claimed in Claim 1, wherein at least one transmitter is a satellite.

**11.** The method as claimed in Claim 1, wherein at least one transmitter is a terrestrial station.

**Patentansprüche**

**1.** Verfahren zur Berechnung der momentanen Charakteristiken eines mit einem GNSS-Empfänger ausgerüsteten Satelliten in einer Umlaufbahn, mit dem Pseudoentfernungsmessungen durchgeführt werden können, wenn weniger als vier Sender gleichzeitig in Sicht sind, **dadurch gekennzeichnet, dass** es folgende Schritte umfasst:

- einen ersten Schritt (20) zur Vorverarbeitung von Messgrößen über den Empfänger, um Messungen der momentanen Pseudoentfernung, Pseudogeschwindigkeit und Pseudobeschleunigung zu liefern,
- einen zweiten Schritt (21) zur mathematischen Verarbeitung dieser Messungen, die aufgrund der Kenntnis von ergänzenden Informationen über die Umlaufbahn des Empfängersatelliten und des Empfängers erweitert sind, die mehrere Lösungen liefern,
- einen dritten Schritt (22) zur physikalischen Filterung dieser Lösungen, welche die Position und die Geschwindigkeit des Empfängersatelliten sowie die Verzerrung und die Taktabweichung des Empfängers liefern.

**2.** Verfahren nach Anspruch 1 , wobei im Laufe des ersten Schritts (20) die Messung der momentanen Pseudogeschwindigkeit entweder durch Differenzierung zweier zeitlich naher Messungen der Pseudoentfernung berechnet

wird: $Pv = \dfrac{Pd2 - Pd1}{\Delta T}$ , wobei AT die Zeitabweiclaung zwischen den beiden Messungen Pd1 und Pd2 ist, oder aber durch Verwendung von Phasenmessungen, sofern verfügbar.

**3.** Verfahren nach Anspruch 1, wobei im Laufe des ersten Schritts (20) die momentane Messung der Pseudobeschleunigung durch Differenzierung zweier zeitlich naher Messungen der momentanen Pseudogeschwindigkeit berechnet

wird: $Pa = \dfrac{Pv2 - Pv1}{\Delta T}$ , wobei $\Delta T$ die Zeitabweichung zwischen den beiden Messungen Pv1 und Pv2 ist.

**4.** Verfahren nach Anspruch 1, wobei im Laufe des zweiten Schritts (21) die gesuchten Lösungen folgende sind:

- Position des Empfängersatelliten $\overline{P}$,
- Geschwindigkeit des Empfangersatelliten $\overline{V}$,
- Taktverzerrung des Empfängers b,

- Frequenzabweichung des Takts des Empfängers $\dfrac{\Delta f}{f}$ .

**5.** Verfahren nach Anspruch 1, wobei im Laufe des dritten Schritts (22) bei einem Empfängersatelliten in erdnaher Umlaufbahn die große Halbachse a der gesuchten Lösung mit 6400 km < a < 8400 km begrenzt betrachtet wird.

**6.** Verfahren nach Anspruch 1, wobei im Laufe des dritten Schritts (22) der Absolutwert der Frequenzabweichung des Takts des Empfängers

- für einen geringwertigen Oszillator (erdnahe Umlaufbahn):

$$\text{mit } \left| \frac{\Delta f}{f} \right| < 300 \text{ m/s,}$$

- für einen hochwertigen Oszillator (geostationäre Umlaufbahn):

$$\text{mit } \left| \frac{\Delta f}{f} \right| < 10 \text{ m/s}$$

begrenzt betrachtet wird.

7. Verfahren nach Anspruch 1, wobei im Laufe des dritten Schritts (22) eine Referenzneigung des Empfängersatelliten (10) betrachtet wird.

8. Verfahren nach Anspruch 7, wobei diejenige Neigung des Satelliten gewählt wird, die dieser Referenzneigung am nächsten ist.

9. Verfahren nach Anspruch 1, wobei im Laufe des dritten Schritts der Satellit in Funksicht eines jeden Senders liegt.

10. Verfahren nach Anspruch 1, wobei zumindest ein Sender ein Satellit ist.

11. Verfahren nach Anspruch 1, wobei zumindest ein Sender eine Bodenstation ist.

FIG. 1

PRETRAITEMENT
DES MESURES

_20_

## FIG. 2

_24_

RESOLUTION
MATHEMATIQUE D'UN
SYSTEME D'EQUATION

_21_

CONNAISSANCE DE L'ORBITE
- DEMI-GRAND AXE
- VISIBILITE RADIO-ELECTRIQUES
- INCLINAISON (OPTIONNELLE)

FILTRAGE
PHYSIQUE DES
SOLUTIONS

_22_

CONTRAINTES EQUIPEMENT
- GEOMETRIE ANTENNE
- CARACTERISTIQUES HORLOGE

SOLUTION UNIQUE

_23_

_25_

S

_30_

_32_

_34_

_31_

_33_

## FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Techniques et technologies des véhicules spatiaux. Localisation spatiale. **MICHEL GRONDIN ; JEAN-LUC ISSLER ; LAURENT LESTARGUIT.** Techniques et technologies des véhicules spatiaux. Localisation spatiale. vol. VI, 191-264
- **J.L. ISSLER ; M. TELLO.** Orbital Navigation with a GPS Receiver on the HETE Spacecraft. *ION GPS,* Janvier 1994
- Linear algebra, Geodesy and GPS. **G. STRANG ; K. BORRE.** Global positioning system. 447-513
- Accord de standardisation ; caractéristiques du système mondial de détermination de la position NAVSTAR (GPS. *Standardization Agreement : Characteristics of the NAVSTAR Global Positioning System (GPS,* 06 Novembre 1991, vol. 429
- **PETER DALY.** GLONASS Approaches Full Operational Capability (FOC. *ION GPS,* Septembre 1995, 1021-1025